# EUROPÄISCHE PATENTSCHRIFT

(11) **EP 1 625 300 B1**
(45) Veröffentlichungstag und Bekanntmachung des Hinweises auf die Patenterteilung: **03.06.2009**
(21) Anmeldenummer: 04717014.7
(22) Anmeldetag: 04.03.2004
(51) Int. Cl.: F02P 5/04, F02N 11/08, F02N 17/00

(54) **VERFAHREN UND VORRICHTUNG ZUM VERBESSERN DES STARTVERHALTENS EINES VERBRENNUNGSMOTORS**
METHODS AND DEVICE FOR IMPROVING THE STARTING BEHAVIOR OF A MOTOR VEHICLE
PROCEDES ET DISPOSITIF POUR AMELIORER LE COMPORTEMENT AU DEMARRAGE D'UN MOTEUR A COMBUSTION INTERNE

(30) Priorität: 09.05.2003 DE 10322361
(43) Veröffentlichungstag der Anmeldung: 15.02.2006
(73) Patentinhaber: ROBERT BOSCH GMBH, 70442 Stuttgart (DE)
(72) Erfinder: CASAL KULZER, André-Francisco, 71032 Boeblingen (DE); LAUBENDER, Jochen, 70439 Stuttgart (DE); SIEBER, Udo, 74321 Bietigheim (DE)
(86) Internationale Anmeldenummer: PCT/DE2004/000411
(87) Internationale Veröffentlichungsnummer: WO 2004/104410

(56) Entgegenhaltungen:
- US-A- 6 050 232
- US-A1- 2002 166 531

## Beschreibung

### Stand der Technik

Die Erfindung betrifft ein Verfahren nach dem Oberbegriff des Anspruchs 1. Ferner betrifft die Erfindung ein Steuergerät, das die Durchführung eines solchen Verfahrens steuert. Ein solches Verfahren und ein solches Steuergerät ist jeweils aus der US 5 074 263 bekannt. Herkömmliche Verbrennungsmotoren werden mit Hilfe eines Fremdkraftstarters gestartet. Der Fremdkraftstarter, in der Regel ein Elektrostarter, dreht den Verbrennungsmotor an, der daraufhin Luft oder ein Gemisch aus Kraftstoff und Luft in seine Brennräume ansaugt. Durch nacheinander erfolgendes Zünden von Brennraumfüllungen bei bereits drehender Kurbelwelle des Verbrennungsmotors wird sukzessiv Drehmoment bereitgestellt, das den Verbrennungsmotor aus eigener Kraft weiter anlaufen lässt.

Zum Starten von Verbrennungsmotoren mit direkter Einspritzung von Kraftstoff in Brennräume des Verbrennungsmotors ist aus der US 6 050 232 ein Verfahren bekannt, des ohne elektromotorischen Starter auskommt. Um ein Startdrehmoment zu erzeugen, wird bereits im Stillstand des Verbrennungsmotors Kraftstoff in eine Luftfüllung eines Brennraums eingespritzt, dessen Kolben in einer Arbeitsposition steht. Anschließend wird die Verbrennung gezündet. Die Verbrennung erzeugt im Idealfall ein Drehmoment, das ausreicht, um den Verbrennungsmotor anlaufen zu lassen.

Im Rahmen des aus der US 6 050 232 bekannten Verfahrens wird der Kraftstoff erst kurz vor der ersten Zündung in die ruhende Luftfüllung des Zylinders eingespritzt. Der kleine zeitliche Abstand zwischen Einspritzung and Zündung reicht in der Regel nicht aus, um ein homogenes Kraftstoff/Luft-Gemisch zu erzielen. Dabei wird unter einem homogenen Kraftstoff/Luft-Gemisch eine möglichst gleichmäßige Verteilung der Kraftstoffteilchen in der Brennraumfüllung verstanden.

Bei der bekannten Einspritzung von Kraftstoff in das ruhende Luftvolumen werden bei den ersten Verbrennungen in der Regel nur Kraftstoff/Luft-Gemische mit Luftüberschuss erzielt. Der Luftüberschuss wird dadurch verursacht, dass ein großer Teil des eingespritzten Kraftstoffes als Wandfilm an den kalten Zylinderwänden und an der kalten Kolbenoberfläche kondensiert. Darüber hinaus können in der kurzen Zeitspanne zwischen Einspritzung und Zündung nur kleinere Kraftstofftröpfchen vollständig verdampfen.

In der Summe folgt daraus, dass ein großer Teil der eingebrachten Kraftstoffmasse nicht an der Verbrennung teilnimmt. Daher gelangt unverbrannter Kraftstoff ins Abgas. Als Folge entstehen erhöhte Emissionen und ein erhöhter spezifischer Kraftstoffverbrauch. Darüber hinaus kann der Anteil an der potentiellen thermodynamischen Energie der Brennraumfüllung, der beim Start in mechanische Arbeit umgewandelt wird, wegen der unzureichenden Gemischaufbereitung so klein sein, dass das Startverhalten des Verbrennungsmotors beeinträchtigt ist. Dies ist insbesondere dann nachteilig, wenn die Beeinträchtigungen des Startverhaltens nicht von einem Fremdkraftstarter (z.B. Elektrostarter) kompensiert werden sollen oder können.

Beim Gegenstand der US 5 074 263 wird dagegen beim Motorauslauf mit abgestellter Zündung noch Kraftstoff eingespritzt, um eine Direktstartfähigkeit (- without the use of a starter motor-) zu ermöglichen.

Im Prinzip wird durch die Erzeugung eines hohen Kraftstoffdampfanteils an der erst bei einem späteren Start zu zündenden Brennraumfüllung eine homogenere Verteilung des Kraftstoffes in der Brennraumfüllung mit Luft erreicht. Als Folge verbessert sich die Zündbarkeit der Brennraumfüllung. Darüber hinaus wird der Anteil des Kraftstoffs im Brennraum, der an der Verbrennung teilnimmt, vergrößert. Durch die vollständigere Verbrennung der Brennraumfüllung wird mehr Drehmoment bei verringerten Schadstoffemissionen entwickelt.

Die resultierende Verbesserung des Startverhaltens ermöglicht die Realisierung des Direktstart-Prinzips in ein Stopp-Start-System, bei dem der Verbrennungsmotor beispielsweise bei Ampelstopps im Stadtverkehr wechselweise abgestellt and gestartet wird. Diese Realisierung setzt eine zuverlässige Direktstartfähigkeit durch ein verbessertes Startverhalten voraus, wie es mit der Erfindung erzielt wird.

Die vorliegende Erfindung unterscheidet sich von diesen Stand der Technik dadurch dass als Maßnahme zur Erzeugung eines hohen Kraftstoffdampfanteils ein Tankentlüftungsventils beim Abstellen des Verbrennungsmotors geöffnet wird.

Durch diese Maßnahme wird in den letzten Arbeitstakten des Verbrennungsmotors beim Abstellen ein bereits vorgemischtes Kraftstoff/Luft-Gemisch durch die Zylinder gespült. Der vorgemischte Zustand ergibt sich dadurch, dass bei offenem Tankentlüftungsventil Luft durch einen mit Kraftstoff beladenen Aktivkohlefilter gesaugt wird und dabei Kraftstoff aufnimmt.

Als Folge des Ansaugens von Kraftstoff/Luft-Gemisch aus der Tankentlüftung liegt beim Stillstand des Verbrennungsmotors bereits eine homogenisierte Gemischzusammensetzung in den Brennräumen des Verbrennungsmotors vor. Beim anschließenden Startvorgang muss dann entweder kein Kraftstoff oder nur eine verringerte Menge an Kraftstoff eingespritzt werden, um eine vollständige Verbrennung der Brennraumfüllung zu erreichen. Durch das Ansaugen von gasförmigem Kraftstoff oder Kraftstoffdampf und durch die damit verbundene Verringerung der in flüssiger Form eingespritzten Kraftstoffmenge wird die Ausbildung von Kraftstoff-Wandfilmen an den Kolben- und Zylinderwänden verhindert oder zumindest verringert. Als Folge treten nur noch verringerte Schadstoffemissionen beim Start auf. Im Besonderen wird die Emission von Kohlenwasserstoffen während der Startphase deutlich reduziert, was auch den spezifischen Kraftstoffverbrauch des Verbrennungsmotors senkt.

Die Erfindung kann auch bei Motoren mit Saugrohreinspritzung mit und ohne Direktstartfähigkeit eingesetzt werden, um allgemein das Startverhalten zu verbessern und die Emissionen beim Start des Verbrennungsmotors zu verringern. Durch das verbesserte Startverhalten lässt sich eine Stopp-Start-Funktion auch bei Unterstützung des Startvorgangs durch einen Fremdkraftstarter realisieren, die wegen des verbesserten und zuverlässigeren Startverhaltens in breiteren Kreisen von Endkunden angenommen wird.

Ferner ist bevorzugt, dass die Maßnahme nur oberhalb eines vorbestimmten Temperaturschwellenwertes ergriffen wird.

Im Prinzip kann eine Spülung der Brennräume mit Kraftstoffdampf/Luft-Gemisch aus der Tankentlüftung beim Abstellen des Verbrennungsmotors mit abgeschalteter Zündung dazu führen, dass Kohlenwasserstoffe unverbrannt in das Abgassystem gelangen. Dadurch, dass die Spülung nur oberhalb einer vorbestimmten Temperatur erfolgt, kann sichergestellt werden, dass solche Kohlenwasserstoffe im Abgassystem durch einen ausreichend warmen und damit betriebsbereiten Katalysator konvertiert werden können.

Ein weiterer Verteil dieser Ausgestaltung besteht darin, das der Katalysator beim Abstellen jeweils noch eine pulsförmige Wärmezufuhr durch exotherme Reaktion der unverbrannten Kohlenwasserstoffe im Katalysator verfährt. Dies ist von Vorteil, weil bei einem Start-Stopp-Betrieb gewährleistet werden muss, dass die Betriebstemperatur des Katalysators während der Phasen mit abgestelltem Verbrennungsmotor nicht unter eine Mindesttemperatur absinkt, unterhalb der eine ausreichende Konvertierung nicht gewährleistet ist. Bei einem Unterschreiten der Mindesttemperatur könnten beim Startvorgang eventuell erhöhte Kohlenwasserstoff-Emissionen sonst nicht konvertiert werden. Durch das definierte Betätigen des Tankentlüftungsventils beim Abstellen des Verbrennungsmotors kann gezielt unverbranntes Kraftstoff-Luft-Gemisch in den Katalysator eingebracht werden, um den Katalysator aufzuheizen. Dadurch wird eine Auskühlung des Katalysators im Stillstand des Verbrennungsmotors verzögert. Als Folge können die Stopp-Phasen im Start-Stopp-Betrieb effektiv verlängert werden.

Bevorzugt ist auch, dass bei einem mehrzylindrigen Verbrennungsmotor Kraftstoff während einer Abstellphase nur für die Brennräume zugemessen wird, deren Kolben sich beim Stillstand des Verbrennungsmotors im Arbeitstakt oder Kompressionstakt befinden.

Durch diese Ausgestaltung kann die Verdampfung von Kraftstoff auch dann verbessert werden, wenn der Kraftstoff in flüssiger Form in die Brennräume eingespritzt wurde. Als Zeitraum zur Einspritzung eignet sich insbesondere die Auspendelphase kurz vor Stillstand des Verbrennungsmotors, in der keiner der Kolben mehr den Verdichtungs-OT (OT = oberer Totpunkt) durchläuft. Dabei versteht man unter der Auspendelphase die Zeitspanne, in der die Kolben bei abgestellter Zündung auf Grund von Gasfederkräften auch zurückfedert.

Es ist bevorzugt, den Kraftstoff noch während der Auspendelphase in diejenigen Zylinder einzuspritzen, die sich im Arbeitstakt (nach dem Verdichtungs-OT) oder im Kompressionstakt (vor dem Verdichtungs-OT) befinden. Dadurch wird erreicht, dass die in den Brennräumen eingeschlossene Mischung aus Luft und Kraftstoff während des Auspendelns der Kolben in den Zylindern abwechselnd verdichtet und entspannt wird. Dadurch wird in den Zylindern ein kurzzeitiger Temperaturanstieg erzeugt, der eine verbesserte Verdampfung des Kraftstoffs sowohl aus Kraftstofftröpfchen in der Luftfüllung als auch aus den Wandfilmen erzeugt. Weiterhin wird durch die abwechselnde Verdichtung und Entspannung lokal in beiden beteiligten Zylindern eine Turbulenz in den Brennräumen erzeugt, die eine bessere Homogenisierung des Kraftstoff-Luft-Gemisches in den Brennräumen mit sich bringt.

Falls erforderlich, kann vor oder auch während der nächsten Startphase, bis zum Erreichen der Leerlaufdrehzahl, mit einer oder mehreren weiteren Kraftstoffeinspritzungen in verschiedene Zylinder noch weiterer Kraftstoff zugemessen werden, um eine möglichst homogene and vollständige Verbrennung zu erreichen. Auch durch diesen Ansatz können die allgemein beim Start vorliegenden Probleme, wie zum Beispiel Wandfilmbildung und erhöhte Startemissionen, effektiv reduziert werden.

Eine weitere bevorzugte Ausgestaltung zeichnet sich dadurch aus, dass bei einem Verbrennungsmotor mit variabler Ventilsteuerung Auslassventile der Brennräume verspätet oder gar nicht geöffnet werden.

Durch diese Ausgestaltung wird die Aufenthaltsdauer des Gemisches in der Brennräumen verlängert. Als Folge wird erreicht, dass während des Auspendelns nur kleine Teilmengen des eingeschlossenen Kraftstoff-Luft-Gemischs durch ein früh öffnendes Auslassventil in das Abgassystem gelangen. Die entwichene Kraftstoffmenge würde in der nachfolgenden Startphase nicht mehr zur Verfügung stehen und müsste daher als flüssiger Kraftstoff eingespritzt werden, was mit dem Risiko einer erneuten Wandfilmbildung verbunden wäre. Dieses Risiko wird durch ein spätes Schließen verringert. Im Extremfall können die Auslassventile bei einer vollvariablen Ventilsteuerung auch ganz geschlossen bleiben.

Es ist auch bevorzugt, dass bei einem mehrzylindrigen Verbrennungsmotor Kraftstoff während einer Abstellphase für wenigstens einen Brennraum zugemessen wird und unverbrannt aus dem Brennraum ausgeschoben wird.

Durch diese Ausgestaltung kann eine erwünschte Aufheizung des Katalysators erzielt werden. Dazu werden kleine Teilmengen des Kraftstoff/Luft-Gemisches aus den Brennräumen in der Auspendelphase gezielt durch frühes Öffnen der Auslassventile in das Abgassystem befördert.
Als Folge tritt eine Aufheizung des Katalysators durch exotherme Reaktionen im Katalysator auf. Dadurch kann das Auskühlen des Katalysators wirkungsvoll verzögert werden, was längere Stopp-Phasen beim Start-Stopp-Betrieb ermöglicht.

Diese Ausgestaltung wird bevorzugt nur oberhalb eines Temperaturschwellenwertes durchgeführt, der der Temperatur des Konvertierungsbeginns im Katalysator (light offtemperature) entspricht.

Ferner ist bevorzugt, dass bei einem Verbrennungsmotor mit variabler Verdichtung die Verdichtung beim Abstellen des Verbrennungsmotors erhöht wird.

Durch die erhöhte Verdichtung kommt es zu einem noch höheren Temperaturanstieg in den einzelnen Kompressionszyklen während der Auspendelphase. Dadurch wird die Verdampfung des Kraftstoffes weiter begünstigt.

Im Rahmen einer weiteren bevorzugten Ausgestaltung wird zusätzlich die Verdichtung beim Start verringert.

Diese Ausgestaltung hat den Vorteil, dass bei einem nachfolgenden Start verringerte Kompressionsarbeiten zu verrichten sind, was einen Start des Verbrennungsmotors begünstigt.

Ein ergänzender Ansatz für eine schnelle Gemischaufbereitung und zur effizienten Verringerung der Rohemissionen beim Kaltstart wird durch den Einsatz von Startkraftstoffen mit einem hohen Anteil an leichtflüchtigen Komponenten bereitgestellt. Dieser Startkraftstoff wird ausschließlich zum Starten des Verbrennungsmotors verwendet. Anschließend wird auf den Betrieb mit herkömmlichem Kraftstoff umgeschaltet.

Der Einsatz von leichtflüchtigen Startkraftstoffen mit hohem Dampfdruck hat den Vorteil, dass beispielsweise bei einer Zumessung in der Auspendelphase durch die wechselseitige Kompression eine noch weitgehendere Verdampfung auftritt als bei herkömmlichem Kraftstoff, so dass eine noch bessere und schnellere Homogenisierung und Gemischaufbereitung für den Folgestart erreicht wird.

Die beschriebenen Maßnahmen können auch miteinander gekoppelt werden, um eine möglichst optimale Homogenisierung and Aufbereitung des Kraftstoff/Luft-Gemisches in den Brennräumen zu erreichen.

Eine bevorzugte Ausgestaltung eines Steuergerätes zeichnet sich dadurch aus, dass es wenigstens eines der vorstehend genannten Verfahren steuert.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen:
- Figur 1: schematisch einen Verbrennungsmotor mit Peripheriegeräten im Teilschnitt;
- Figur 2: ein Ausführungsbeispiel eines erfindungsgemäßen Programms Verfahrens als Flussdiagramm eines Programms zur Steuerung des Verbrennungsmotors; und

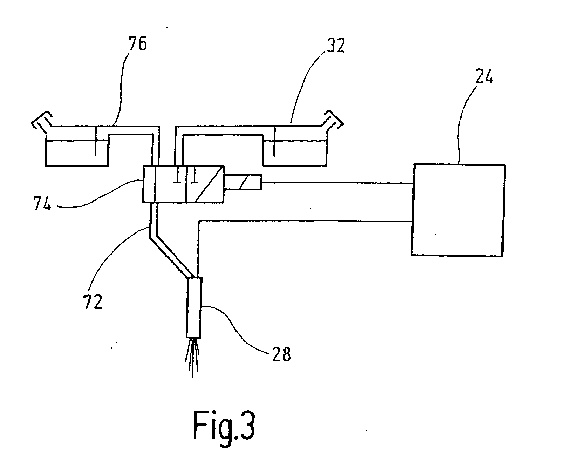

- Figur 3: schematisch ein Kraftstoffversorgungssystem, das eine Umschaltung zwischen einem Startkraftstoff und einem Normalkraftstoff ermöglicht.

### Beschreibung der Ausführungsbeispiele

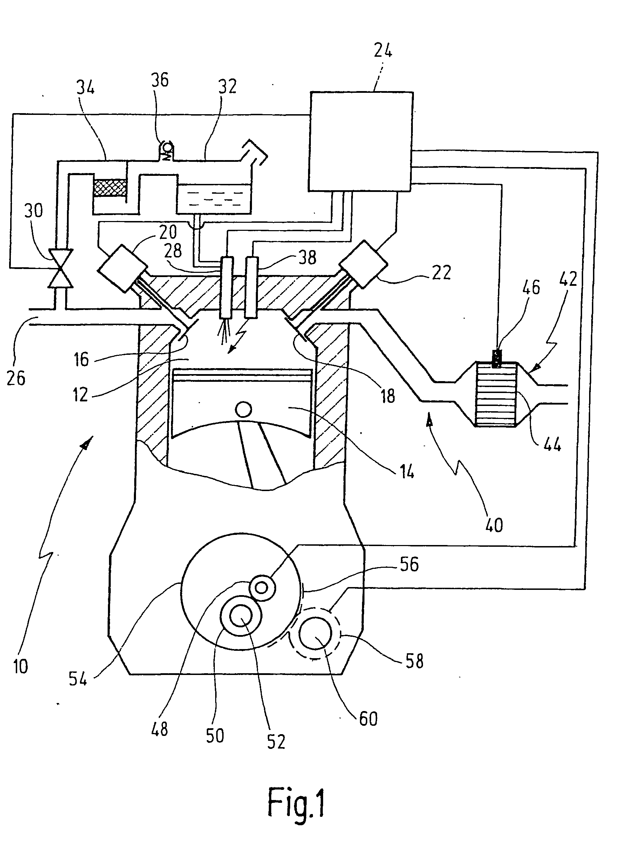

Figur 1 zeigt schematisch die Gesamtansicht eines Verbrennungsmotors 10 im Teilschnitt.

Der Verbrennungsmotor 10 weist wenigstens einen Brennraum 12 auf, der von einem Kolben 14 beweglich abgedichtet wird. Die Füllung des Brennraums 12 mit Kraftstoff/Luft-Gemisch sowie mit verbranntem Restgas aus einer Verbrennung des Kraftstoff/Luft-Gemisches wird über wenigstens ein Einlassventil 16 und wenigstens ein Auslassventil 18 gesteuert. Dazu ist das Einlassventil 16 mit einem Einlassventilsteller 20 gekoppelt und das Auslassventil 18 ist mit einem Auslassventilsteller 22 gekoppelt. Sowohl der Einlassventilsteller 20 als auch der Auslassventilsteller 22 können als Nockenwellen realisiert sein, deren Phasenlage zueinander und/oder zu der Kurbelwelle des Verbrennungsmotors 10 fest vorbestimmt oder aber variabel ist. Alternativ können sowohl der Einlassventilsteller 20 als auch der Auslassventilsteller 22 als elektromagnetische, elektrohydraulische oder elektropneumatische Stellglieder realisiert sein, die von einem Steuergerät 24 öffnend und schließend angesteuert werden.

Bei geöffnetem Einlassventil 16 und abwärts laufendem Kolben 14 wird Luft oder ein Gemisch aus Kraftstoff und Luft aus einem Saugrohr 26 in den wenigstens einen Brennraum 12 gesaugt. Zur angesaugten Luftmenge wird eine passende Kraftstoffmenge über ein Einspritzventil 28 als flüssiger Kraftstoff oder über ein Tankentlüftungsventil 30 als dampfförmiger Kraftstoff zugemessen. Das Einspritzventil 28 ist in der Figur 1 so angeordnet, dass es den Kraftstoff direkt in den wenigstens einen Brennraum 12 dosiert. Diese Anordnung ist jedoch nicht zwingend erforderlich. Alternativ zu dieser Anordnung kann das Einspritzventil 28 auch so angeordnet sein, dass es den Kraftstoff in das Saugrohr 26, beispielsweise vor das Einlassventil 16 einspritzt.

Über das Tankentlüftungsventil 30 kann dem Verbrennungsmotor 10 dampfförmiger Kraftstoff zugeführt werden, der zuvor im Kraftstofftank 32 verdunstet ist und zwischenzeitlich in einem Aktivkohlefilter 34 gespeichert wurde. Bei geöffnetem Tankentlüftungsventil 30, abwärts laufendem Kolben 14 und geöffnetem Einlassventil 16 wird Kraftstoffdampf aus dem Aktivkohlefilter 34 und dem Tank 32 angesaugt. Über ein federbelastetes Belüftungsventil 36 kann Außenluft in den Tank 32 und das Leitungssystem nachströmen, so dass Beschädigungen des Kraftstofftanks 32 durch den Ansaugunterdruck verhindert werden.

Die bei geschlossenem Einlassventil 16 und Auslassventil 18 verdichtete Füllung des Brennraums 12 mit Luft und Kraftstoff wird von einer Zündkerze 38 fremdgezündet, wobei die Zündung durch einen Steuerbefehl des Steuergeräts 24 ausgelöst wird. Nach beendeter Verbrennung läuft der zwischenzeitlich nach unten gelaufene Kolben 14 wieder nach oben und schiebt die verbrannten Restgase über das geöffnete Auslassventil 18 in ein Abgassystem 40 aus.

Das Abgassystem 40 weist einen Katalysator 42 auf, der katalytische Flächen 44 besitzt, an denen Schadstoffe im Abgas katalytisch konvertiert werden. Der Katalysator 42 kann optional mit einem Temperatursensor 46 gekoppelt sein, der die Temperatur im Katalysator 42 erfasst und ein entsprechendes Signal an das Steuergerät 24 liefert. Ein solches Temperatursignal kann jedoch auch aus Betriebsparametern des Verbrennungsmotors wie Drehzahl, Füllungsmenge des Brennraums 12 und Zündzeitpunkt durch ein Rechenmodell im Steuergerät 24 gebildet werden. Bei einer solchen modellhaften Bildung einer Temperatur, bei der es sich bevorzugt um die Temperatur des Katalysators 42 handelt, kann auf den Temperatursensor 46 verzichtet werden.

Weiter ist der Verbrennungsmotor 10 mit einem Elektrostarter 48 ausgestattet, der mit einem Kurbelwellenzahnrad 50 gekoppelt ist und über das Kurbelwellenzahnrad 50 eine Kurbelwelle 52 des Verbrennungsmotors 10 abtreiben kann.

Im Rahmen einer optionalen Ausgestaltung der Erfindung besitzt der Verbrennungsmotor 10 eine variable Verdichtung. Bekanntlich ist das Verdichtungsverhältnis ε gleich der auf das Verdichtungsendvolumen normierten Summe aus Verdichtungsendvolumen und Hubvolumen. Dabei ist das Verdichtungsendvolumen durch das Volumen des Brennraums 12 im oberen Totpunkt des Kolbens 14 definiert und das Hubvolumen ist als das vom Kolben 14 bei seiner Bewegung von einem oberen Totpunkt zu einem unteren Totpunkt (beziehungsweise umgekehrt) überstrichene Volumen definiert.

Zur Realisierung einer variablen Verdichtung kann die Kurbelwelle 52 exzentrisch in einem Exzenterring 54 gelagert sein, der wiederum drehbar im Motorblock des Verbrennungsmotors 10 gelagert ist. Der Exzenterring 54 besitzt zu diesem Zweck eine Verzahnung 56, die mit der Verzahnung 58 eines Stellgliedes 60 kämmt. Das Stellglied 60 kann beispielsweise ein Elektromotor sein, der vom Steuergerät 24 gesteuert wird. Durch Drehung des Exzenterrings 54 wird die Höhe der Lagerung der Kurbelwelle 52 im Verbrennungsmotor 10 variiert. Wird die Lagerung der Kurbelwelle 52 nach oben verlagert, wird das Verdichtungsendvolumen verkleinert und das Verdichtungsverhältnis entsprechend erhöht. Die in der Figur 1 dargestellte Position der Kurbelwelle 52 und des Exzenterrings 54 entspricht dagegen einer niedrigen Verdichtung.

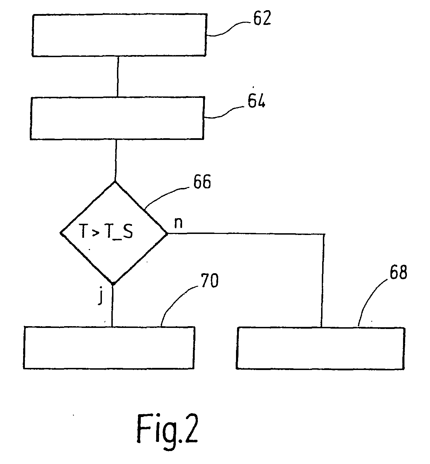

Figur 2 zeigt ein Ausführungsbeispiel eines erfindungsgemäßen Verfahrens in der Form eines Flussdiagramms eines Motorsteuerungsprogramms, wie es im technischen Umfeld der Figur 1 durch das Steuergerät 24 gesteuert wird. Dabei entspricht der Schritt 62 einem Programm zur Steuerung des Verbrennungsmotors 10, wie es während des normalen Betriebs des Verbrennungsmotors 10 abgearbeitet wird. Sobald der Verbrennungsmotor abgestellt werden soll, wird in den Schritt 64 verzweigt, in dem die Ausgabe von Steuersignalen zur Auslösung von Zündungen durch die Zündkerze 38 und die Auslösung von Kraftstoffzumessungen über das Einspritzventil 28 oder das Tankentlüftungsventil 30 unterbunden wird.

Anschließend erfolgt optional im Schritt 66 der Vergleich einer Temperatur T mit einem Temperaturschwellenwert T_S. Bei diesem Temperaturvergleich kommt es letztlich auf die Temperatur der katalytischen Flächen 44 des Katalysators 42 an. Im Rahmen einer Ausgestaltung der Erfindung sollen weitere Maßnahmen zur Erzeugung eines hohen Kraftstoffdampfanteils an der Brennraumfüllung nur dann ergriffen werden, wenn die Temperatur T größer als der Schwellenwert T_S ist. Dabei ist der Schwellenwert T_S so bemessen, dass oberhalb des Schwellenwertes von einer Schadstoffkonvertierung im Katalysator 42 ausgegangen werden kann.

Wie bereits erwähnt, kann die Temperatur des Katalysators 42 oder der katalytischen Flächen 44 direkt mit einem Temperatursensor 46 gemessen werden oder sie kann alternativ durch eine Modellrechnung im Steuergerät 24 bestimmt werden.

Ist die durch Messung oder Rechnung bestimmte Temperatur T nicht größer als der Schwellenwert T_S, wird die Anfrage in Schritt 66 verneint und in den Schritt 68 verzweigt, der einem Abstellen des Verbrennungsmotors 10 ohne das Auslösen vor Maßnahmen zur Erzeugung eines hohen Kraftstoffdampfanteils an der Brennraumfüllung entspricht. Der Grund für dieses Vorgehen liegt darin, dass das Auslösen von Maßnahmen zur Erzeugung eines hohen Kraftstoffdampfanteils an der Brennraumfüllung beim Abstellen des Verbrennungsmotors 10 zur Emission von Kohlenwasserstoffen in das Abgassystem 40 des Verbrennungsmotors 10 führen kann. Um zu verhindern, dass solche Kohlenwasserstoffe in die Umwelt gelangen, wird diese Emission nur dann erlaubt, wenn die Kohlenwasserstoffe im Katalysator 42 in unschädliche Abgasbestandteile konvertiert werden können. Dies ist in der Regel der Fall, wenn die Temperatur T den Schwellenwert T_S überschreitet. In einem solchen Fall wird die Abfrage im Schritt 66 bejaht und zum Schritt 70 verzweigt. Der Schritt 70 löst wenigstens eine Maßnahme zur Erzeugung eines hohen Kraftstoffdampfanteils an der Brennraumfüllung beim Abstellen des Verbrennungsmotors 10 aus.

Eine solche Maßnahme kann beispielsweise darin bestehen, dass den Brennräumen 12 des Verbrennungsmotors 10 beim Auslaufen des Verbrennungsmotors 10 nur noch dampfförmiger Kraftstoff aus dem Aktivkohlefilter 34 und dem Gasraum des Tanks 32 zugeführt wird. Zu diesem Zweck wird im Schritt 70 nach Figur 2 das Tankentlüftungsventil 30 öffnend angesteuert. Während der letzten Umdrehungen des Verbrennungsmotors 10 wird daher Kraftstoffdampf über das Tankentlüftungsventil 30 in die Brennräume 12 gesaugt. Da der Kraftstoff, der über das Tankentlüftungsventil 30 angesaugt werden kann, bereits dampfförmig ist, wird mit dieser Maßnahme ein hoher Kraftstoffdampfanteil an der Brennraumfüllung erzielt. Bei einem nachfolgenden Neustart des Verbrennungsmotors 10 lässt sich die Füllung des Brennraums 12 mit dem hoher Kraftstoffdampfanteil besonders leicht zünden und verbrennt vollständiger als es bei einer Einspritzung von flüssigem Kraftstoff bei dem vorhergehenden Abstellen des Verbrennungsmotors 10 der Fall wäre.

Dabei kann das Öffnen des Tankentlüftungsventils 30 so erfolgen, dass der Kraftstoffdampf beim Auslaufen des Verbrennungsmotors 10 noch in Brennräume 12 des Verbrennungsmotors 10 gesaugt, nicht aber aus den Brennräumen 10 ausgestoßen wird. Für eine solche Steuerung wird das Tankentlüftungsventil 30 gewissermaßen erst unmittelbar vor dem Stillstand des Verbrennungsmotors 10 geöffnet. Dadurch kann die Emission von Kohlenwasserstoffen aus den Brennräumen 12 des Verbrennungsmotors 10 in das Abgassystem 40 verhindert oder zumindest verringert werden. Diese Art der Steuerung ist daher auch bei niedrigen Katalysatortemperaturen möglich. Mit anderen Worten: Diese Art der Steuerung kann in Verbindung mit einer Abfolge der Schritte 62, 64 und 70 nach Figur 2 verbunden werden, so dass die optionale Temperaturabfrage des Schritts 66 in diesem Fall nicht vorgenommen wird.

Alternativ kann es aber gerade in Verbindung mit dem Schritt 66 nach Figur 2 vorteilhaft sein, das Tankentlüftungsventil 30 bereits früher während des Abstellens des Verbrennungsmotors 10 zu öffnen. Bei einer rechtzeitigen Öffnung des Tankentlüftungsventils 30 wird nämlich Kraftstoffdampf aus dem Tankentlüftungssystem, das aus dem Kraftstofftank 32, dem Aktivkohlefilter 34 und dem Tankentlüftungsventil 30 besteht, in Brennräume 12 des Verbrennungsmotors gesaugt und unverbrannt in das Abgassystem 40 mit dem Katalysator 42 ausgestoßen. Die unterbrannten Kohlenwasserstoffe im Abgassystem 40 reagieren exotherm im Katalysator 42, sofern dessen Konvertierungsbeginntemperatur (light off-temprature) überschritten ist.

Dadurch können, wie bereits weiter oben erwähnt wurde, Auskühlungen des Katalysators 42 zumindest verzögert werden.

Alternativ oder ergänzend zur Steuerung des Tankentlüftungsventils 30 kann bei Verbrennungsmotoren 10 mit variabler Ventilsteuerung das Schließen der Ausgangsventile 18 verspätet erfolgen oder ganz unterbleiben. Durch diese Maßnahme wird die Verweildauer des Kraftstoffdampf/Luft-Gemisches in den Brennräumen 12 des Verbrennungsmotors 10 verlängert und die Wahrscheinlichkeit, mit der unverbrannte Kohlenwasserstoffe ins Abgassystem 40 gelangen, verkleinert. Diese Art der Auslassventilsteuerung empfiehlt sich daher bei niedrigen Temperaturen.

Alternativ dazu können bei höheren Temperatur T die Auslassventile 18 der Brennräume 12 auch früher als im Normalbetrieb üblich geöffnet werden, um dadurch unverbrannte Kohlenwasserstoffe in das Abgassystem 40 zu leiten. Auch durch diese Maßnahmen kann die Auskühlung des Katalysators 42 beim Stillstand des Verbrennungsmotors 10 verzögert werden.

Alternativ oder ergänzend zur Ansteuerung des Tankentlüftungsventils 30 und/oder der veränderten Ansteuerung von Auslassventilen 18 des Verbrennungsmotors 10 wird bei einem mehrzylindrigen Verbrennungsmotor Kraftstoff während einer Abstellphase nur für die Brennräume 12 zugemessen, deren Kolben 14 sich beim Stillstand des Verbrennungsmotors 10 im Arbeitstakt oder Kompressionstakt befinden. Durch diese Maßnahme kann ein Auspendeln des Verbrennungsmotors 10 beim Abstellen, also ein Vor- und Zurücklaufen der Kolben 14 des Verbrennungsmotors 12 aufgrund von Gasfedermomenten in den Brennräumen 12 zur thermischen Aufbereitung der im Verdichtungstakt und Arbeitstakt eingeschlossenen Brennraumfüllungen verwendet werden.

Weiter alternativ oder ergänzend kann bei einem Verbrennungsmotor 10 mit variabler Verdichtung die Verdichtung beim Abstellen des Verbrennungsmotors 10 erhöht werden, da die erhöhte Verdichtung eine Temperatursteigerung beim Auspendeln bewirkt, was ebenfalls die thermische Gemischaufbereitung des in den Brennräumen eingeschlossenen Kraftstoff/Luft-Gemisches verbessert, deren Kolben sich im Verdichtungstakt oder Arbeitstakt befinden. Bei einem Verbrennungsmotor 10 mit variabler Verdichtung wird die beim Abstellen des Verbrennungsmotors 10 erhöhte Verdichtung vorteilhafterweise mit einem Verringern der Verdichtung beim nachfolgenden Neustart des Verbrennungsmotors 10 kombiniert. Die verringerte Verdichtung beim Neustart hat zur Folge, dass die beim Neustart aufzubringende Kompressionsarbeit verringert wird. Dadurch wird insgesamt ein leichteres Hochlaufen des Verbrennungsmotors nach einem Neustart, also ein schnellerer Drehzahlanstieg nach einem Neustart ermöglicht.

## Patentansprüche

1. Verfahren zum Erzeugen von Füllungen wenigstens eines Brennraums (12) eines mit Fremdzündung arbeitenden Verbrennungsmotors (10) mit Kraftstoff und Luft, wobei wenigstens eine Brennraumfüllung in einer Abstellphase des Verbrennungsmotors (10) erzeugt wird und erst bei einem nachfolgenden Start des Verbrennungsmotors (10) gezündet wird, wobei während der Abstellphase wenigstens eine Maßnahme zur Erzeugung eines hohen Kraftstoffdampfanteils an der Brennraumfüllung ergriffen wird, **dadurch gekennzeichnet, dass** als Maßnahme zur Erzeugung eines hohen Kraftstoffdampfanteils ein Tankentlüftungsventil (30) beim Abstellen des Verbrennungsmotors (10) geöffnet wird.

2. Verfahren nach Anspruch 1, **dadurch gekennzeichnet, dass** die Maßnahme nur oberhalb eines vorbestimmten Temperaturschwellenwertes ergriffen wird.

3. Verfahren nach einem der vorhergehenden Ansprüche, **dadurch gekennzeichnet, dass** bei einem mehrzylindrigen Verbrennungsmotor (10) Kraftstoff während einer Abstellphase nur für die Brennräume (12) zugemessen wird, deren Kolben (14) sich beim Stillstand des Verbrennungsmotors (10) im Arbeitstakt oder Kompressionstakt befinden.

4. Verfahren nach Anspruch 3, **dadurch gekennzeichnet, dass** bei einem Verbrennungsmotor (10) mit variabler Ventilsteuerung Auslassventile (18) der Brennräume (12) verspätet oder gar nicht geöffnet werden.

5. Verfahren nach einem der Ansprüche 1 bis 2, **dadurch gekennzeichnet, dass** bei einem mehrzylindrigen Verbrennungsmotor (10) Kraftstoff während einer Abstellphase für wenigstens einen Brennraum (12) zugemessen wird und unverbrannt aus dem Brennraum (12) ausgeschoben wird.

6. Verfahren nach Anspruch 5, **dadurch gekennzeichnet, dass** es nur oberhalb eines Temperaturschwellenwertes durchgeführt wird.

7. Verfahren nach einem der vorhergehenden Ansprüche, **dadurch gekennzeichnet, dass** bei einem Verbrennungsmotor (10) mit variabler Verdichtung die Verdichtung beim Abstellen des Verbrennungsmotors (10) erhöht wird.

8. Verfahren nach Anspruch 4, **dadurch gekennzeichnet, dass** die Verdichtung beim Start verringert wird.

9. Steuergerät (24) zum Steuern der Erzeugung von Füllungen wenigstens eines Brennraums (12) eines mit Fremdzündung arbeitenden Verbrennungsmotors (10) mit Kraftstoff und Luft, wobei wenigstens eine Brennraumfüllung in einer Abstellphase des Verbrennungsmotors (10) erzeugt wird und erst bei einem nachfolgenden Start des Verbrennungsmotors (10) gezündet wird, **dadurch gekennzeichnet, dass** das Steuergerät wenigstens eines der Verfahren nach den Ansprüchen 1 bis 9 steuert.

## Claims

1. Method for generating fillings of at least one combustion space (12) of an internal combustion engine (10) operating by spark ignition with fuel and air, at least one combustion-space filling being generated in a stopping phase of the internal combustion engine (10) and being ignited only in the event of a subsequent start of the internal combustion engine (10), at least one measure for generating a high fuel-vapour fraction in the combustion-space filling being taken during the stopping phase, **characterized in that,** as the measure for generating a high fuel-vapour fraction, a tank venting valve (30) is opened during the stopping of the internal combustion engine (10).

2. Method according to Claim 1, **characterized in that** the measure is taken only above a predetermined temperature threshold value.

3. Method according to one of the preceding claims, **characterized in that,** in the case of a multi-cylinder internal combustion engine (10), during a stopping phase fuel is metered only to the combustion spaces (12), the pistons (14) of which are in working stroke or compression stroke when the internal combustion engine (10) is at a standstill.

4. Method according to Claim 3, **characterized in that,** in the case of an internal combustion engine (10) with variable valve control, outlet valves (18) of the combustion spaces (12) are opened with a delay or not at all.

5. Method according to either Claim 1 or 2, **characterized in that,** in the case of a multi-cylinder internal combustion engine (10), during a stopping phase fuel is metered to at least one combustion space (12) and is expelled, unburnt, out of the combustion space (12).

6. Method according to Claim 5, **characterized in that** it is carried out only above a temperature threshold value.

7. Method according to one of the preceding claims, **characterized in that,** in the case of an internal combustion engine (10) with variable compression, the compression is increased during the stopping of the internal combustion engine (10).

8. Method according to Claim 4, **characterized in that** the compression is reduced during starting.

9. Control apparatus (24) for controlling the generation of fillings of at least one combustion space (12) of an internal combustion engine (10) operating by spark ignition with fuel and air, at least one combustion-space filling being generated in a stopping phase of the internal combustion engine (10) and being ignited only in the event of a subsequent start of the internal combustion engine (10), **characterized in that** the control apparatus controls at least one of the methods according to Claims 1 to 9.

## Revendications

1. Procédé pour produire des remplissages d'au moins une chambre de combustion (12) d'un moteur à combustion interne (10) à allumage par étincelles avec du carburant et de l'air, au moins un remplissage de la chambre de combustion étant réalisé dans une phase de coupure du moteur à combustion interne (10) et n'étant allumé qu'après le redémarrage du moteur à combustion interne (10), au moins une mesure pour produire une haute proportion de vapeur de carburant au niveau du remplissage de la chambre de combustion étant prise pendant la phase de coupure, **caractérisé en ce qu'**en tant que mesure pour produire une haute proportion de vapeur de carburant, on ouvre une soupape de désaérage du réservoir (30) lors de la coupure du moteur à combustion interne (10).

2. Procédé selon la revendication 1, **caractérisé en ce que** la mesure n'est prise qu'au-dessus d'une valeur seuil de température prédéterminée.

3. Procédé selon l'une quelconque des revendications précédentes, **caractérisé en ce que** dans le cas d'un moteur à combustion interne (10) à plusieurs cylindres, du carburant est ajouté pendant une phase de coupure seulement pour les chambres de combustion (12) dont les pistons (14) se trouvent dans le temps de travail ou de compression à l'arrêt du moteur à combustion interne (10).

4. Procédé selon la revendication 3, **caractérisé en ce que** dans le cas d'un moteur à combustion interne (10) à commande de soupape variable, les soupapes d'échappement (18) des chambres de combustion (12) sont ouvertes avec retard ou ne sont pas ouvertes du tout.

5. Procédé selon l'une quelconque des revendications 1 à 2, **caractérisé en ce que** dans le cas d'un moteur à combustion interne (10) à plusieurs cylindres, du carburant est ajouté pendant une phase de coupure pour au moins une chambre de combustion (12) et est expulsé de la chambre de combustion (12) sans avoir été brûlé.

6. Procédé selon la revendication 5, **caractérisé en ce qu'**il n'est mis en oeuvre qu'au-dessus d'une valeur seuil de température.

7. Procédé selon l'une quelconque des revendications précédentes, **caractérisé en ce que** dans le cas d'un moteur à combustion interne (10) à compression variable, la compression est augmentée lors de la coupure du moteur à combustion interne (10).

8. Procédé selon la revendication 4, **caractérisé en ce que** la compression est réduite lors du démarrage.

9. Appareil de commande (24) pour commander la production de remplissages d'au moins une chambre de combustion (12) d'un moteur à combustion interne (10) à allumage par étincelles, avec du carburant et de l'air, au moins un remplissage de la chambre de combustion étant réalisé dans une phase de coupure du moteur à combustion interne (10) et n'étant allumé qu'après le redémarrage du moteur à combustion interne (10), **caractérisé en ce que** l'appareil de commande commande au moins l'un des procédés selon les revendications 1 à 9.
